(19) **Europäisches Patentamt / European Patent Office / Office européen des brevets**

(11) **EP 1 859 688 B1**

(12) **EUROPÄISCHE PATENTSCHRIFT**

(45) Veröffentlichungstag und Bekanntmachung des Hinweises auf die Patenterteilung:
**01.07.2009 Patentblatt 2009/27**

(51) Int Cl.:
***A23L 1/06*** *(2006.01)*

(21) Anmeldenummer: **06027095.6**

(22) Anmeldetag: **29.12.2006**

(54) **Diätgeeigneter Fruchtaufstrich**

Fruit spread suitable for diet

Pâte à tartiner à base de fruits convenant pour des régimes

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.05.2006 DE 202006008518 U**

(43) Veröffentlichungstag der Anmeldung:
**28.11.2007 Patentblatt 2007/48**

(73) Patentinhaber: **STUTE Nahrungsmittelwerke GmbH & Co. KG**
**33098 Paderborn (DE)**

(72) Erfinder: **Szczecinski, Hans-J., Dr.**
**58644 Iserlohn (DE)**

(74) Vertreter: **Oser, Andreas et al**
**Prüfer & Partner GbR**
**Patentanwälte**
**Sohnckestrasse 12**
**81479 München (DE)**

(56) Entgegenhaltungen:
DE-U1-8202006 008 51    US-A- 3 865 957
US-A1- 2006 008 574

• ISSANCHOU S N ET AL: "ORAL CONSISTENCY AND SIMPLE RHEOLOGICAL MEASUREMENT OF STRAWBERRY JAMS CONSISTANCE ORALE ET MESURE RHEOLOGIQUE SIMPLE DE CONFITURES DE FRAISES" SCIENCES DES ALIMENTS, LAVOISIER ABONNEMENTS, PARIS, FR, Bd. 11, Nr. 1, 1991, Seiten 85-98, XP000916243 ISSN: 0240-8813

**Beschreibung**

Die Erfindung betrifft einen Diät-Fruchtaufstrich, der für Diabetiker (Diabetis melitus Erkrankte) zur Verwendung im Rahmen eines Diätplanes geeignet ist und gegenüber herkömmlichen Konfitüren/Marmeladen keine Geschmacksbeeinträchtigungen aufweist.

Die vorbekannten diätgeeigneten Fruchtaufstriche werden regelmäßig entweder mit Sorbit und/oder Fruktose und/oder mit künstlichen Süßstoffen hergestellt. Diese Fruchtaufstriche schmecken je nach dem, welche der vorgenannten Zutaten zur Versüßung verwendet worden ist, im Verhältnis zu einer vergleichbaren Konfitüre entweder sehr süß oder sehr wenig süß, wodurch in der Regel ein nichtfruchtiger, und sogar metallischer Geschmackseindruck, insbesondere Nachgeschmack entsteht.

Die US2003/0170365A1 beschreibt eine diätgeeignete Süßungszusammensetzung auf natürlicher Basis, die ein Lo Han Kuo - Fruchtkonzentrat, Isomalt und Fruktooligosaccharid - die letzten beiden Komponenten im Verhältnis von 20:1 - enthält. Ferner beschreibt die EP0970618A eine Fruktose enthaltende Süßungskomponente, die im Fall des Beispiels 3 zusätzlich Inulin und Isomalt enthält, zur Süßung einer Dessertcreme auf natürlicher Basis. Keiner der vorgenannten Druckschriften lässt sich entnehmen, wie die beschriebenen sensorischen Nachteile bezüglich diätgeeigneter Fruchtaufstriche beseitigt werden können. US 3,865,957 beschreibt Lebensmittel enthaltend Isomaltitol, unter anderem Konfitüren. Mischungen aus Fruktose und Isomaltitol werden als zuckerähnlich beschrieben.

Der Erfindung lag die Aufgabe zugrunde, einen Fruchtaufstrich bereitzustellen, der die beschriebenen sensorischen Nachteile nicht aufweist, also das gleiche Geschmackserlebnis bietet wie eine aus den gleichen Früchten hergestellte herkömmliche (zuckerhaltige) Konfitüre, der aber unter diätetischen Gesichtspunkten verbessert ist.

Diese Aufgabe wird erfindungsgemäß durch eine Kombination von in bestimmten Mengen zusammenzufügenden Zutaten gelöst. Die Erfindung stellt somit einen diätgeeigneten Fruchtaufstrich gemäß Anspruch 1 sowie einen speziellen Fruchtaufstrich gemäß Anspruch 2 zur Verfügung. Bevorzugte Weiterbildungen des diätgeeigneten Fruchtaufstrichs sind in den Unteransprüchen definiert. Der erfindungsgemäß entwickelte Fruchtaufstrich umfasst in einer besonderen Ausführungsform

- einen Fruchtgehalt von 5-50 Gew.-%,
- eine Süßungskomponente mit einer Mischung von Fruktose und Isomalt im Verhältnis von mindestens etwa 1:1 und höchstens etwa 10:1,
- wobei die Süßungskomponente und die Früchte so miteinander verbunden werden, dass die Trockenmasse im Endprodukt zwischen 20-60 Gew.-% liegt.
  Bei einem günstigen diätetischen Ergebnis ist hier das sensorische Geschmackserlebnis optimiert.

Der Ausdruck "Isomalt" ist in jedweder bekannten Bedeutung zu verstehen. Typischerweise ist damit ein Gemisch mit den Bestandteilen 1-0-$\alpha$-D-Glucopyranosyl-D-sorbit (GPS) und 1-O-$\alpha$-D-Glucopyranosyl-D-mannit-dihydrat (GMD) gemeint. Geeignet für diese Stoffkomponente ist insbesondere das unter dem Namen Palatinit$^®$ bekannte, etwa aus gleichen Teilen GPS und GMD bestehende Gemisch.

Der Fruchtbestandteil in der Zusammensetzung des erfindungsgemäßen Aufstrichs kann aus Früchten, Fruchtbestandteilen oder ähnlichem (inklusive Fruchtsäfte und Fruchtmarks) stammen. Die Form des Aufstrichs kann beliebig gewählt werden, beispielsweise eine Form, die ausgewählt ist unter Marmeladen, Konfitüren, Gelees und dergleichen. Die zur Herstellung des Fruchtaufstrichs verwendbaren Früchte sind ebenfalls frei wählbar, beispielsweise aus der Gruppe, die aus Erdbeere, Himbeere, Rote und/oder Schwarze Johannisbeere, Sauerkirsche, Aprikose, Orange, Heidelbeere oder einer Mischung solcher Früchte wie z.B. Waldfrüchte mit Himbeere, Brombeere und Heidelbeere besteht.

Die für den erfindungsgemäßen Fruchtaufstrich zu verwendende Süßungskomponente enthält Fruktose und Isomalt; bei der sensorisch optimierten Ausführungsform sind diese Bestandteile im Gewichtsverhältnis von etwa 10:1 bis etwa 1:1 enthalten, insbesondere zwischen diesen Grenzverhältnissen. Bevorzugt enthält die Süßungskomponente Fruktose und Isomalt im Verhältnis von 2,5:1 bis 7,5:1, weiter bevorzugt im Verhältnis von etwa 5:1. In einer speziellen Ausführungsform besteht die Süßungskomponente ausschließlich aus Fruktose und Isomalt in den genannten Mischungsverhältnissen. Mit dem speziellen Mischungsverhältnis und insbesondere mit den bevorzugten Mischungsverhältnissen, sowie unter Beachtung der oben angegebenen Werte bezüglich Fruchtgehalt und End-Trockenmasse werden ausgezeichnete sensorischen Ergebnisse erreicht. Ferner hat sich überraschend herausgestellt, insbesondere in dem Fall, daß die Süßungskomponente allein aus Fruktose und Isomalt besteht, daß gut einstellbare sensorische Ergebnisse verbunden sind mit einer vorteilhaften Kombination aus niedrigem Glykämischen Index (GI) bzw. niedriger Glykämischer Last (GL) und gleichzeitig guter und angenehmer relativer Süße.

Das spezielle Mischungsverhältnis von Fruktose zu Isomalt ist im Rahmen der Erfindung auf die der Frucht hinzugefügten Zutat, d.h. der zugefügten Süßungskomponente festgelegt. Dies gilt unabhängig von möglicherweise variablen Mengen des freien Fruktosegehalts des eingesetzten Fruchtgehalts. Will man das Verhältnis von Fruktose zu Isomalt aus dem Endprodukt ermitteln, so ist also typischerweise noch der Fruktosegehalt, der aus der Menge an freier Fruktose des eingesetzten Fruchtgehalts stammt, abzuziehen, um die eingesetzte Fruktose-Zugabemenge zu bestimmen. Hierfür kann der aus der eingesetzten Frucht stammende, freie Fruktosegehalt zum Beispiel aus bekannten Tabellen entnommen werden, die solche Werte bezüglich der verwendeten Frucht im Allgemeinen angeben, oder er kann durch bekannte Meßmethoden wie naß-chemischer Bestimmung oder zerstörungsfreier Bestimmung (letzteres z.B. durch Nahinfrarot- (NIR-) Spetralanalyse) von Fruktose aus der jeweils verwendeten Frucht ermittelt werden.

Weitere Bestandteile des erfindungsgemäßen Fruchtaufstrichs können sein, sind jedoch nicht beschränkt auf Verdickungsmittel wie Pektin, Stärke und modifizierte Stärke, Zellulose und Zellulosederivate, Johannisbrotkernmehl, Gellan, Carrageen und dergleichen; Säuerungsmittel wie Zitronensäure, Ascorbinsäure, Weinsäure, Essigsäure, Äpfelsäure, Phosphorsäure und dergleichen, allein oder in Kombination mit einem lebensmittel-verträglichen Salz als Säureregulator wie z.B. Citrat, Acetat, Ascorbat, Tartrat, Phosphat und dergleichen; ferner weitere optionale Additive wie pflanzliche Öle, Konservierungsstoffe, Lebensmittelfarben, Füllstoffe, Trägerstoffe etc.

In einer sensorisch besonders bevorzugten Ausgestaltung ist es vorgesehen, den Fruchtaufstrich mit 35 % Fruchtgehalt, einer Trockenmasse von 45 % und einer Süßungskomponente bestehend aus Fruktose und Isomalt im Verhältnis von 5:1 herzustellen. Diese Ausgestaltung ist gegenüber einer zuckerhaltigen Konfitüre ("Konfitüre extra") um 30% im Brennwert reduziert.

Die vorliegende Erfindung wird nachfolgend anhand von Beispielen näher beschrieben, die jedoch lediglich zur Veranschaulichung und nicht einschränkend zu verstehen sind.

1. Versuchsreihe mit erfindungsgemäßen und Vergleichsbeispielen

In einem Vergleichstest wurden verschiedene Brotaufstriche unter Verwendung verschiedener Süßungskomponenten hergestellt und dabei unterschiedliche Fruchtgehalte der ausgewählten Frucht Erdbeere sowie unterschiedliche End-Trockenmassen eingestellt, wie in der nachfolgenden Tabelle 1 aufgelistet. Dabei wurde ein erfindungsgemäßer Fruchtaufstrich mit einer Süßungskomponente aus Fruktose und Isomalt verglichen mit Vergleichsprodukten, die jeweils andere Süßungskomponenten enthielten. Das erfindungsgemäße Produkt und die Vergleichsprodukte enthielten übliche Zusatzstoffe wie Pektin, Zitronensäure, Citrat und Wasser.

Aus dem jeweiligen Endprodukt wurden der Brennwert in kcal/100g, die relative Süße sowie die Glykämische Last pro 30g-Portion ermittelt. Die in Tabelle 1 gezeigten Ergebnisse machen deutlich, dass mit der erfindungsgemäßen Süßungskomponente mit Fruktose und Isomalt günstige Mengen an Fruchtgehalt und Trockenmasse erhalten werden, und insbesondere dass sich im Vergleich zu anderen Süßungskomponenten ein besonders niedriger Wert der Glykämischen Last in Kombination mit einem guten Wert der relativen Süße bei gleichzeitig niedrigem Brennwert ergibt. Bei dem erfindungsgemäßen Fruchtaufstrich wurde ein besonders ausgewogenes Verhältnis von an sich gegensätzlichen Eigenschaften erzielt.

Tabelle 1

| Brotaufstriche im Vergleich | | | | | | |
|---|---|---|---|---|---|---|
| Bezeichnung Fruchtaufstrich-Produkt | TM | FG | Glykämische Last pro 30g - Portion | rel. Süße | kcal/100g | |
| Erdbeer mit Sorbit | 60 | 45 | 3,5 | 33,4 | 144 | Vergleich |
| Erdbeer mit Fruktose | 30 | 55 | 4,0 | 28,8 | 110 | Vergleich |
| Erdbeer mit Saccharose + Glukose/Fruktose | 62 | 50 | 9,6 | 50,6 | 241 | Vergleich |
| Erdbeer mit Saccharose + Glukose/Fruktose | 49 | 55 | 8,6 | 36,0 | 187 | Vergleich |
| Erdbeer mit Fruktose | 47 | 45 | 4,4 | 72,0 | 251 | Vergleich |
| Erdbeer Spezialform mit Fruktose | 60 | 50 | 4,6 | 65,8 | 231 | Vergleich |
| Erdbeer mit Fruktose und Isomalt | 45 | 35 | 3,3 | 44,0 | 163 | Erfindung |
| TM = Trockenmasse FG = Fruchtgehalt | | | | | | |

## 2. Versuchsreihe mit erfindungsgemäßen und Vergleichsbeispielen

In einem erfindungsgemäßen Beispiel wurde ein Diät-Fruchtaufstrich auf Basis von Erdbeere hergestellt, indem zunächst der Fruchtzubereitung Fruktose und Isomalt in unterschiedlichen Gewichts-Mischungsverhältnissen als Süßungskomponente zugesetzt wurde und anschließend als weitere Komponenten Pektin, Zitronensäure, Tricalciumcitrat, Sonnenblumenöl und Wasser zugegeben wurden, sodass der Fruchtgehalt 35 Gew.-% und die End-Trockenmasse 45 Gew.-% betrug. Die jeweiligen Mengen an Fruktose und Isomalt, die pro kg pro Kochkessel zugesetzt wurden, sowie die entsprechenden Mengenverhältnisse sind in der nachfolgenden Tabelle 2 zusammengefasst.

Wie die in Tabelle 2 zusammengefassten sensorischen Ergebnisse zeigen, besitzt der erfindungsgemäße Diät-Fruchtaufstrich mit einem Verhältnis Fruktose zu Isomalt von 5:1 einen optimalen Ausgleich von angenehm süßen und fruchtigen Geschmack (s. Sorte Erdbeer 2). Über einem Verhältnis von etwa 10:1 (s. Sorte Erdbeer 1) entwickelt sich die Tendenz zu einem Geschmack, der zwar süß ist, jedoch einen metallischen und wenig fruchtigen Geschmackseindruck vermittelt, wohingegen bei einem Verhältnis von unter etwa 1:1 (s. Sorte Erdbeer 3) die Tendenz zu unrundem, wenig fruchtigem Geschmack in unakzeptabler Weise zunimmt, sodann bei etwa 1:2 zusätzlich ein nachteiliger stumpfer Nachgeschmack entsteht (s. Sorte Erdbeer 4) und schließlich bei etwa 1:10 (s. Sorte Erdbeer 5) ein spitz saurer und wenig süßer Geschmackseindruck erhalten wird. Das Ergebnis beim Versuch der Sorte Erdbeer 1 ist ähnlich zu einem Vergleichs-Fruchtaufstrich, der nur mit Fruktose gesüßt ist, während beim Versuch der Sorte Erdbeer 3 ein ähnliches Ergebnis erhalten wird wie bei einem Vergleichs-Fruchtaufstrich nur mit Sorbit. Das Verhältnis von Fruktose zu Isomalt sollte daher mindestens etwa 1:1 und höchstens etwa 10:1 betragen.

Tabelle 2

| Sorte | TM | FG | kg pro Kessel zugesetzt | | ungefähres Verhältnis | Sensorisches Ergebnis | |
|---|---|---|---|---|---|---|---|
| | | | Fruktose | Isomalt | | | |
| Erdbeer 1 | 45% | 35% | 568 | 57 | 10:1 | süß, Tendenz zu metallischem, wenig fruchtigem Geschmack | Erfindung |
| Erdbeer 2 | 45% | 35% | 525 | 100 | 5:1 | angenehm süß, fruchtig | Erfindung |
| Erdbeer 3 | 45% | 35% | 314,5 | 312,5 | 1:1 | Tendenz zu unrundem, wenig fruchtigem Geschmack | Erfindung |
| Erdbeer 4 | 45% | 35% | 212 | 415 | 1:2 | Stumpfer Nachgeschmack | Vergleich |
| Erdbeer 5 | 45% | 35% | 57 | 568 | 1:10 | spitz sauer, wenig süß | Vergleich |
| TM = Trockenmasse FG = Fruchtgehalt | | | | | | | |

## Beispiel

Unter Verwendung einer Süßungskomponente mit Fruktose und Isomalt im Verhältnis von 5:1 wurden mit dem in der zweiten Versuchsreihe beschriebenen Herstellungsverfahren diätgeeignete Fruchtaufstriche unterschiedlicher Fruchtsorten bei einem Fruchtgehalt von 35 Gew.-% hergestellt. Ergebnisse der Sensorik und sowie Werte bezüglich Glykämischem Index (GI), Glykämischer Last (GL) und Brennwert (Reduktion gegenüber einer zuckerhaltigen Vergleichskonfitüre) für das jeweilige Fruchtprodukt sind in der nachfolgenden Tabelle 3 zusammengestellt. Der GL-Wert ergibt sich aus folgender Formel aus dem GI-Wert:

$$GL\text{-Wert} = \frac{GI\text{-Wert (in \%) x Kohlenhydratmenge (g) in Portion}}{100}$$

Die Ergebnisse des Beispiels zeigen, dass eine ausgezeichnete Sensorik mit einem ausgewogenen Verhältnis von gutem niedrigem GI und GL verbunden mit einer deutlichen Verminderung des Brennwerts und dennoch angenehmer, ausreichend hoher Süße gegenüber einem Vergleichs-fruchtaufstrich auf Zuckerbasis erhalten wird, unabhängig davon, welche Ausgangsfrucht verwendet wird.

Tabelle 3

| Produktbezeichnung | Erdbeer | Waldfrucht (Himbeerert, Brombeeren, Heidelbeeren) | Himbeer | Rote und Schwarze Johannis-beere | Sauerkirsch |
|---|---|---|---|---|---|
| **Produktspezifikation verschiedener Fruchtaufstriche** | | | | | |
| Sensorik<br>Farbe Geruch<br>Geschmack Konsistenz | dunkelrot typisch, fruchtig fruchtig, aromatisch weich, gut streichfähig, mit Fruchtstücken | dunkelrot bis schwarz typisch, fruchtig fruchtig, aromatisch weich, gut streichfähig, mit Fruchtbestandteilen | dunkelrot, mit Fruchtkemen typisch, fruchtig fruchtig, aromatisch weich, gut streichfähig | dunkelrot bis schwarz typisch, fruchtig fruchtig, aromatisch weich, gut streichfähig, mit Fruchtbestandteilen | dunkelrot typisch, fruchtig fruchtig, aromatisch weich, gut streichfähig, mit Fruchtbestandteilen |
| Brennwert (Reduktion gegenüber zuckerhaltiger Konfitüre) | 30% weniger | 30% weniger | 30% weniger | 30 % weiniger | 30% weniger |
| Glykämischer Indexe (GI) | 33,0 | 27,4 | 25,3 | 19,9 | 25,3 |
| Glykämische Last (GL), bezogen auf 25g Fruchtaufstrich | 3,7 | 3 | 2,8 | 2,2 | 2,8 |

Auf der Basis der gezeigten Ergebnisse kann somit allgemein festgestellt werden, daß ein diätgeeigneter Fruchtaufstrich in einer anderen besonderen Ausführungsform auf einem eingesetzten Fruchtgehalt von 5 bis 50 % basiert und im Endprodukt eine Trockenmasse zwischen 20 und 60 % umfaßt, wobei der Fruchtaufstrich mit einer Süßungskomponente mit Fruktose und Isomalt gesüßt ist und eine Glykämische Last (GL) im Produkt von unter 4,0 aufweist. Vorteilhafterweise kann dabei der Glykämische Index (GI) auf unter 40,0, noch besser auf unter 35,0, und teilweise - je nach Fruchtsorte - sogar auf unter 30,0 gehalten werden. Bei dieser Ausführungsform ist neben einem gut einstellbaren sensorischen Geschmack hier das diätetische Ergebnis bei gleichzeitig angenehmer Süße optimiert. Somit kann erfindungsgemäß die Süßungskomponente mit Fruktose und Isomalt, bevorzugt im Mischungsverhältnis von 1:1 bis 10:1, allgemein zum Süßen von Fruchtaufstrichen verwendet werden, speziell zum Zweck eines zuckerfreien Süßens und insbesondere bei einem Fruchtaufstrich wie in der oben erwähnten Ausführungsform definiert.

## Patentansprüche

1.  Diätgeeigneter Fruchtaufstrich, hergestellt unter Verwendung einer Süßungskomponente, die Fruktose und Isomalt im Verhältnis von mindestens 1:1 und höchstens 10:1 bei einem Fruchtgehalt von 5 bis 50 % enthält, wobei die Bestandteile so miteinander kombiniert sind, dass die Trockenmasse im Endprodukt zwischen 20 und 60 % liegt.

2.  Fruchtaufstrich mit 35 % Fruchtgehalt, einer Trockenmasse von 45 % und einer Süßungskomponente aus Fruktose und Isomalt im Verhältnis von 5:1.

## Claims

1.  Fruit spread suitable for diet, manufactured using a sweetening component which contains fructose and isomalt in a ratio of at least 1:1 and at the most 10:1 at a fruit content of 5 to 50%, wherein the constituents are combined in such a manner that the dry mass in the final product is between 20 and 60%.

2.  Fruit spread with a fruit content of 35%, a dry mass of 45% and a sweetening component of fructose and isomalt in the ratio of 5:1.

## Revendications

1.  Pâte à tartiner aux fruits allégée, fabriquée en utilisant un composant sucrant, qui contient du fructose et de l'isomalt en un rapport d'au moins 1 : 1 et d'au maximum 10 : 1 pour une teneur en fruits de 5 à 50 %, les ingrédients étant combinés entre eux de manière que le taux de matière sèche dans le produit final se situe entre 20 et 60 %.

2.  Pâte à tartiner aux fruits ayant 35 % de teneur en fruits, un taux de matière sèche de 45 % et un composant sucrant constitué de fructose et d'isomalt en un rapport de 5 : 1.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030170365 A1
- EP 0970618 A
- US 3865957 A